# FASCICULE DE BREVET EUROPEEN

(11) **EP 3 520 206 B1**
(45) Date de publication et mention de la délivrance du brevet: **08.07.2020**
(21) Numéro de dépôt: 17784373.7
(22) Date de dépôt: 29.09.2017
(51) Int. Cl.: H02K 11/04, H02K 11/05, H02K 9/06, H02K 5/20

(54) **MACHINE ELECTRIQUE TOURNANTE AVEC UN ELEMENT ANTI-REBOUCLAGE DE FLUX MUNI DE PLOTS D'OBTURATION**
ELEKTRISCHE DREHMASCHINE MIT EINEM ANTI-LOOPBACK-STRÖMUNGSELEMENT MIT DICHTUNGSSTOPFEN
ROTATING ELECTRICAL MACHINE WITH AN ANTI-LOOPBACK FLOW ELEMENT EQUIPPED WITH SEALING PLUGS

(30) Priorité: 30.09.2016 FR 1659392
(43) Date de publication de la demande: 07.08.2019
(73) Titulaire: Valeo Equipements Electriques Moteur, 94046 Créteil Cedex (FR)
(72) Inventeur: TAUVRON, Fabrice, 94046 Créteil (FR); JUGOVIC, Svetislav, 94046 Creteil (FR); BOUDJEMAI, Farouk, 94046 Creteil (FR)
(74) Mandataire: Duprez, Richard
(86) Numéro de dépôt international: PCT/FR2017/052677
(87) Numéro de publication internationale: WO 2018/060655

(56) Documents cités:
- EP-A1- 2 091 136
- WO-A2-2014/207768
- FR-A1- 2 923 098
- FR-A1- 3 010 591
- FR-A1- 3 018 011
- JP-A- H1 056 762
- JP-B1- 5 661 167

## Description

La présente invention porte sur une machine électrique tournante avec un élément anti-rebouclage de flux d'air muni de plots d'obturation. L'invention trouve une application particulièrement avantageuse, mais non exclusive, dans le domaine des alternateurs, des alterno-démarreurs et des machines réversibles pour véhicules automobiles.

De façon connue en soi, une machine électrique tournante comporte un carter et, à l'intérieur de celui-ci, un rotor à griffes, solidaire en rotation d'un arbre, et un stator qui entoure le rotor avec présence d'un entrefer.

Le rotor comporte deux roues polaires présentant chacune un flasque d'orientation transversale pourvu à sa périphérie externe de griffes d'orientation axiale. Les griffes des roues polaires sont imbriquées les unes par rapport aux autres. Un noyau cylindrique est intercalé axialement entre les flasques des roues. Ce noyau porte à sa périphérie externe une bobine d'excitation formée autour d'un élément isolant intercalé radialement entre le noyau et la bobine.

Par ailleurs, le stator comporte un corps constitué par un empilage de tôles minces formant une couronne, dont la face intérieure est pourvue d'encoches ouvertes vers l'intérieur pour recevoir des enroulements de phase. Ces enroulements traversent les encoches du corps du stator et forment des chignons faisant saillie de part et d'autre du corps du stator. Les enroulements de phase sont obtenus par exemple à partir d'un fil continu recouvert d'émail ou à partir d'éléments conducteurs en forme d'épingles reliées entre elles par soudage.

Les enroulements de phase sont reliés électriquement à des modules électroniques de puissance via leur sortie de phase. Ces modules de puissance forment un pont redresseur de tension. Généralement, chaque module de puissance comporte une unité de commande apte à piloter par exemple deux ou trois bras de pont comportant chacun deux éléments redresseurs constitués par exemple par des transistors du type MOSFET.

Les modules de puissance sont intégrés dans un dissipateur thermique. Des connexions entre les terminaux des modules de puissance et les pistes d'un connecteur sont effectuées par exemple par soudure laser à travers des zones de connexion.

Le connecteur est fixé sur le dissipateur thermique au moyen de vis assurant une liaison mécanique et électrique entre certaines pistes du connecteur et le dissipateur thermique. Le sous-ensemble formé par le connecteur et le dissipateur thermique est fixé au palier relié électriquement à la masse.

Le problème d'une telle configuration est qu'il existe des traces et des vis apparentes soumises à différents potentiels électriques. Un élément anti-rebouclage de flux d'air, qui empêche le retour vers l'électronique de l'air chaud sortant de la machine électrique, permet également d'isoler les traces et les vis par rapport au palier relié à la masse mais ne permet pas de les isoler entre elles. En conséquence, en cas de rétention d'eau, des ponts salins se créent et accélèrent fortement la corrosion des vis et des traces du pont redresseur.

Les documents FR 3010591, JP 5661167 et WO 2014/207768 décrivent chacun différentes architectures de machine électrique tournante présentant un dissipateur thermique supportant des modules électriques de puissance et de commande.

L'invention vise à remédier efficacement à cet inconvénient en proposant une machine électrique tournante, notamment pour véhicule automobile, comportant:
- un dissipateur thermique muni d'au moins un logement,
- un module électrique positionné dans le logement et comportant au moins un terminal de connexion,
- un connecteur comportant au moins une piste reliée électriquement au terminal de connexion et un logement destiné à recevoir un moyen de liaison, notamment une tête d'une vis, assurant une liaison mécanique et électrique entre la piste du connecteur et le dissipateur thermique, et
- un élément anti-rebouclage de flux d'air interposé entre un palier de la machine électrique tournante et le connecteur,
caractérisée en ce que l'élément anti-rebouclage de flux d'air est disposé pour éviter la recirculation de l'air chaud et comporte au moins un plot d'obturation du logement du moyen de liaison.

Les plots d'obturation viennent alors boucher les logements des moyens de liaison. L'invention permet ainsi, grâce à la présence des plots d'obturation, d'isoler les moyens de liaison, notamment les têtes de vis, du pont redresseur par rapport aux environnements corrosifs. Ces plots assurent également le maintien de la plaque sur le palier lors des étapes de montage de la machine électrique. En outre, compte tenu du faible degré de modification à apporter à la configuration de l'élément anti-rebouclage de flux d'air, l'invention a peu d'impact sur la ligne d'assemblage de la machine électrique tournante.

Selon une réalisation le plot d'obturation est situé, axialement, entre le connecteur et un corps de l'élément anti-rebouclage de flux d'air.

Selon une réalisation, le plot d'obturation est situé en regard du connecteur.

Selon une réalisation, le connecteur comporte au moins une zone de soudage avec le terminal de connexion du module électrique, l'élément anti-rebouclage de flux d'air comportant au moins un plot d'obturation de la zone de soudage.

Selon une réalisation, la zone de soudage présente un logement, ledit logement étant obturé par un plot d'obturation de la zone de soudage.

Selon une réalisation, le plot d'obturation est réalisé dans un matériau élastique, notamment un matériau polymère.

Selon une réalisation, le plot d'obturation est compressé entre le connecteur et le corps de l'élément anti-rebouclage de flux d'air.

Selon une réalisation, une hauteur du plot d'obturation à l'état non contraint est supérieure à une hauteur dudit plot lorsqu'il est contraint. Par exemple, la hauteur du plot d'obturation à l'état non contraint est entre 20 et 40% supérieure, notamment 30% supérieure, à la hauteur dudit plot lorsqu'il est contraint.

Selon une réalisation, un rayon du plot d'obturation est supérieur à un rayon du logement du moyen de liaison.

Selon une réalisation, le rayon du plot d'obturation est supérieur d'une longueur comprise entre 0.5 et 2mm, notamment 1.5mm, par rapport au rayon du logement du moyen de liaison.

Selon une réalisation, l'élément anti-rebouclage de flux d'air est surmoulé sur le plot d'obturation.

Selon une réalisation, le plot d'obturation est rapporté et fixé sur l'élément anti-rebouclage de flux d'air.

Selon une réalisation, le plot d'obturation est issu de matière avec l'élément anti-rebouclage de flux d'air de manière à former une pièce bi-matière.

Selon une réalisation, l'élément anti-rebouclage de flux d'air comporte une pluralité de plots d'obturation reliés entre eux de manière à former un joint.

Selon une réalisation, le dissipateur thermique est relié à un potentiel positif d'une batterie.

Selon une réalisation, le connecteur comporte un muret s'étendant autour du logement destiné à recevoir le moyen de liaison. En variante, le connecteur est dépourvu de muret.

Selon une réalisation, le plot d'obturation présente une forme creuse dans laquelle le moyen de liaison est inséré.

L'invention sera mieux comprise à la lecture de la description qui suit et à l'examen des figures qui l'accompagnent. Ces figures ne sont données qu'à titre illustratif mais nullement limitatif de l'invention.
La figure 1 est une vue en coupe longitudinale d'une machine électrique tournante selon la présente invention;
La figure 2 est une vue en perspective montrant l'extrémité arrière de la machine électrique tournante selon la présente invention;
La figure 3 est une vue en perspective éclatée du connecteur, des modules électroniques de puissance, et du dissipateur thermique de la machine électrique tournante selon la présente invention;
La figure 4 est une vue en perspective du sous-ensemble formé par le dissipateur thermique et le connecteur de la machine électrique tournante selon la présente invention;
Les figures 5a et 5b sont des vues en perspective illustrant deux modes de réalisation des plots d'obturation associés à l'élément anti-rebouclage de flux d'air selon la présente invention;
La figure 6 est une vue en perspective et en coupe illustrant le positionnement des plots d'obturation par rapport aux têtes des vis assurant la fixation entre le dissipateur et le connecteur selon la présente invention.

Les éléments identiques, similaires, ou analogues conservent la même référence d'une figure à l'autre.

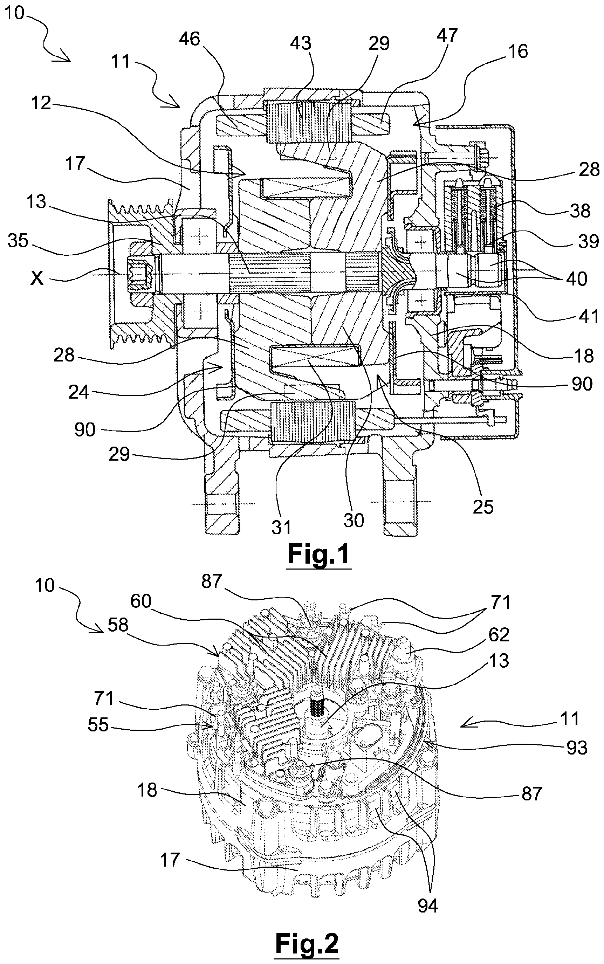

On a représenté sur la figure 1 une machine électrique tournante, telle qu'un alternateur 10 compact et polyphasé, notamment pour véhicule automobile. L'alternateur 10 est apte à transformer de l'énergie mécanique en énergie électrique et pourra être réversible. Un tel alternateur réversible, appelé alterno-démarreur, permet de transformer de l'énergie électrique en énergie mécanique notamment pour démarrer le moteur thermique du véhicule.

Cet alternateur 10 comporte un carter 11 et, à l'intérieur de celui-ci, un rotor à griffes 12 monté sur un arbre 13, et un stator 16, qui entoure le rotor 12 avec présence d'un entrefer entre la périphérie externe du rotor 12 et la périphérie interne du stator 16. L'axe X suivant lequel s'étend l'arbre 13 forme l'axe de rotation du rotor 12.

Le carter 11 comporte des paliers avant 17 et arrière 18 portant le stator 16. Dans cet exemple, les paliers 17, 18 sont de forme creuse et portent chacun centralement un roulement à billes pour le montage à rotation de l'arbre 13.

Plus précisément dans l'exemple de la figure 1, le rotor 12 comporte deux roues polaires 24, 25 présentant chacune un flasque 28 d'orientation transversale pourvu à sa périphérie externe de griffes 29 par exemple de forme trapézoïdale et d'orientation axiale. Les griffes 29 d'une roue 24, 25 sont dirigées axialement vers le flasque 28 de l'autre roue. La griffes 29 d'une roue polaire 24, 25 pénètrent dans un espace d'entredent existant entre deux griffes 29 voisines de l'autre roue polaire, de sorte que les griffes 29 des roues polaires 24, 25 sont imbriquées les unes par rapport aux autres.

Un noyau cylindrique 30 est intercalé axialement entre les flasques 28 des roues 24, 25. En l'occurrence, le noyau 30 consiste en deux demi-noyaux appartenant chacun à l'un des flasques 28. Ce noyau 30 porte à sa périphérie externe un bobinage rotorique d'excitation 31.

L'arbre 13 pourra être emmanché à force dans l'alésage central des roues polaires 24, 25. Du côté de son extrémité avant, l'arbre 13 pourra comporter une partie filetée pour la fixation d'une poulie 35. La poulie 35 appartient à un dispositif de transmission de mouvements à au moins une courroie entre l'alternateur 10 et le moteur thermique du véhicule automobile.

Le palier arrière 18 porte un porte-balais 38 muni de balais 39 destinés à venir frotter contre des bagues 40 d'un collecteur 41 pour assurer l'alimentation du bobinage du rotor 12.

Par ailleurs, le stator 16 comporte un corps 43 en forme de paquet de tôles doté d'encoches équipées d'isolant d'encoches pour le montage des phases du stator 16. Chaque phase comporte au moins un enroulement de phase traversant les encoches du corps de stator 43 et forme, avec toutes les phases, un chignon avant 46 et un chignon arrière 47 de part et d'autre du corps de stator 43.

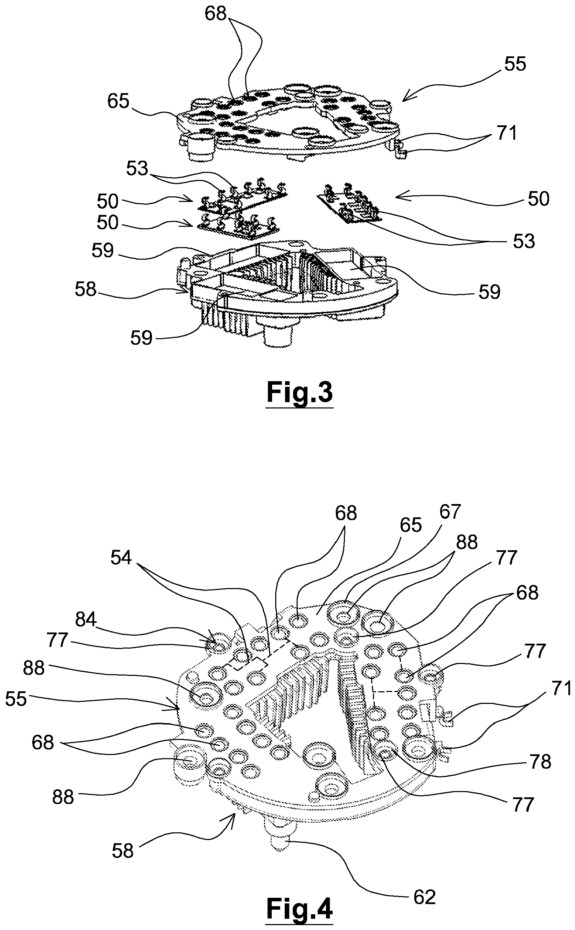

Les enroulements de phase sont obtenus par exemple à partir d'un fil continu recouvert d'émail ou à partir d'éléments conducteurs en forme d'épingles reliées électriquement entre elles par exemple par soudage. Les enroulements de phase sont reliés électriquement à des modules électroniques de puissance 50 via leur sortie de phase. Ces modules de puissance 50 visibles en figure 3 forment un pont redresseur de tension pour transformer la tension alternative générée par l'alternateur 10 en une tension continue pour alimenter notamment la batterie et le réseau de bord du véhicule.

Chaque module de puissance 50 comporte une unité de commande apte à piloter plusieurs bras de pont, notamment deux ou trois bras de pont, comportant chacun deux éléments redresseurs. Les éléments redresseurs sont des interrupteurs constitués par exemple par des transistors du type MOSFET.

Des terminaux de connexion 53 sont associés aux différents modules de puissance 50 pour l'interconnexion avec les pistes d'un connecteur 55 décrit plus en détails ci-après.

Comme on peut le voir dans l'exemple la figure 3, les modules de puissance 50 sont intégrés dans un dissipateur thermique 58, c'est-à-dire qu'ils sont positionnés chacun à l'intérieur d'un logement 59 correspondant ménagé dans le dissipateur thermique 58. Avantageusement, le dissipateur thermique 58 comporte une pluralité d'ailettes 60 s'étendant en saillie depuis la face externe du corps du dissipateur 58.

Le connecteur 55 établit des connexions électriques notamment entre les terminaux 53 des modules de puissance 50 et des sorties de phase de l'alternateur 10. Le connecteur 55 établit également des connexions électriques entre les composants des modules de puissance 50 et le potentiel positif via une borne positive B+ référencée 62. La borne positive 62 est, par exemple, disposée sur le dissipateur thermique 58. En outre, le connecteur 55 établit également des connexions électriques entre les composants des modules de puissance 50 et une masse du véhicule notamment via le palier arrière 18.

A cet effet, comme cela est illustré sur la figure 4, le connecteur 55 comporte un corps 65, en forme générale de plaque réalisée en matériau isolant, surmoulé sur un ensemble de pistes conductrices 54 dont certaines ont été représentées en traits discontinus. Les connexions entre les terminaux 53 des modules de puissance 50 et les pistes 54 sont effectuées par exemple par soudure laser à travers des zones de soudage 68.

Comme cela est visible sur les figures 2, 3, et 4, certaines pistes 54 débordent radialement vers l'extérieur du corps du connecteur 65 en étant aménagés à leurs extrémités libres sous forme de pattes de connexion 71 pour établir la connexion avec les sorties de phase du bobinage statorique.

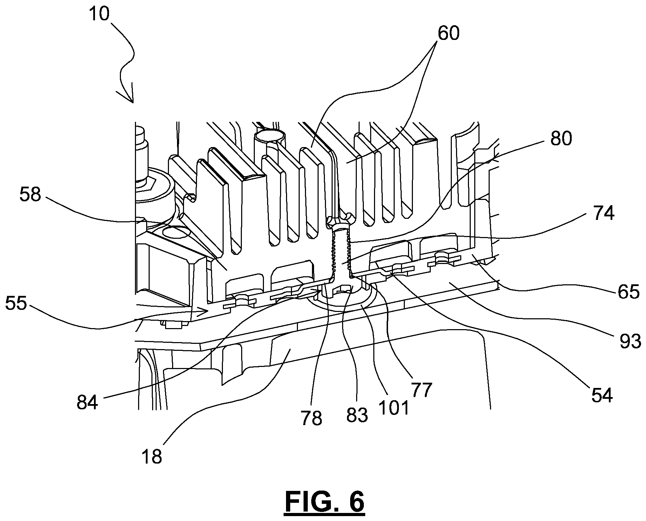

Le connecteur 55 est fixé sur le dissipateur thermique 58 au moyen de moyen de liaison tel que des vis 74 assurant chacun une liaison mécanique et électrique entre une piste 54 du connecteur 55 et le dissipateur thermique 58. A cet effet, les vis 74 traversent des ouvertures 77 correspondantes du connecteur 55, tel que cela est montré sur la figure 4. Ces ouvertures 77 sont définies par des œillets 78 de forme annulaire issus des pistes 54 du connecteur 55. Comme on peut le voir sur la figure 6, ces ouvertures 77 sont positionnées en regard de trous taraudés 80 du dissipateur 58 recevant les extrémités filetées des vis 74. Dans cet exemple, les têtes de vis 83 sont reçues dans des logements 84 ménagés dans le corps 65 du connecteur 55 de manière à venir en appui sur un œillet 78 correspondant délimitant le fond du logement 84. Chaque logement peut être entouré par un muret 67 s'étendant en saillie à partir du corps 65. Le logement associé au muret permet une meilleure isolation du moyen de liaison.

Le sous-ensemble formé par le connecteur 55 et le dissipateur thermique 58 est fixé sur le palier arrière 18 de la machine électrique par exemple au moyen de vis ou de goujons 87 établissant une connexion entre les pistes 54 du connecteur 55 et une masse de la machine électrique tournante, tel que cela est montré sur la figure 2. A cet effet, les vis ou les goujons 87 traversent des ouvertures correspondantes du connecteur 55 référencées 88 sur la figure 4. Des canons isolants positionnés autour des vis 74 pourront être prévus pour éviter d'éventuels court-circuits.

Afin d'assurer le refroidissement de l'alternateur, des pales 90 sont montées solidaires en rotation sur les extrémités axiales du rotor 12 afin d'assurer une circulation d'air à l'intérieur de l'alternateur 10, tel que montré sur la figure 1. Pour éviter la recirculation de l'air chaud sortant de la machine vers l'intérieur de la machine, on utilise un élément anti-rebouclage de flux d'air 93 destiné à obturer partiellement les ouïes 94 ménagées dans le palier arrière.

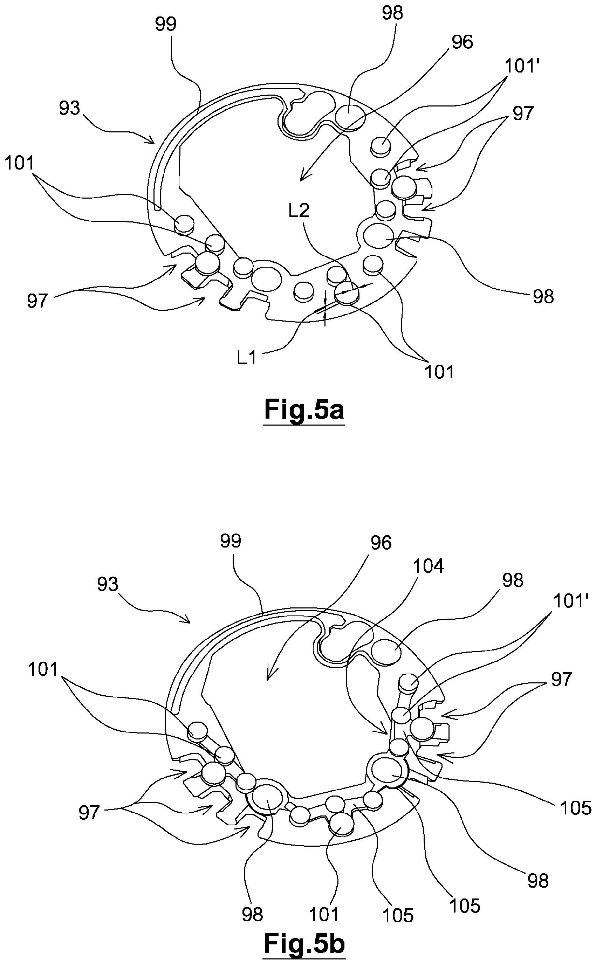

L'élément anti-rebouclage de flux d'air 93 est interposé axialement entre le palier arrière 18 de la machine et le connecteur 55. Comme cela est représenté sur l'exemple des figures 5a et 5b, l'élément 93 présente une forme de plaque annulaire munie d'une ouverture centrale 96. En périphérie externe, des échancrures 97 sont prévues pour le passage des sorties de phases pour leur connexion avec les pattes de connexion 71. Des trous traversants 98 réalisés entre la périphérie interne et la périphérie externe de l'élément 93 permettent notamment le passage des vis ou des goujons 87 de liaison à la masse. Un muret 99 en saillie axiale pourra s'étendre localement à proximité de la périphérie externe de l'élément 93.

Comme cela est illustré par la figure 6, l'élément anti-rebouclage de flux d'air 93 comporte en outre des plots d'obturation 101 destinés chacun à obturer un logement 84 de la tête de vis 83 ménagé dans le connecteur 55. L'élément anti-rebouclage de flux d'air 93 pourra également comporter des plots d'obturation 101' des zones de soudage 68.

Comme on peut le voir sur la figure 5a, les plots 101, 101' pourront par exemple présenter une forme cylindrique avec des faces d'extrémité bombées. Les plots 101, 101' sont réalisés de préférence dans un matériau élastique, notamment un matériau polymère.

De préférence, une hauteur L1 mesurée axialement des plots d'obturation 101 à l'état non contraint, c'est-à-dire lorsque les plots 101 ne sont pas écrasés entre le palier 18 et le corps 65 du connecteur 55, est supérieure à une hauteur du plot d'obturation 101 à l'état contraint, c'est-à-dire lorsque les plots 101 sont écrasés entre le palier 18 et le corps 65 du connecteur 55. Autrement dit, une fois la machine électrique tournante montée, les plots 101 sont compressés.

De préférence, la hauteur L1 du plot d'obturation 101 à l'état non contraint est entre 20 et 40% supérieure, notamment 30% supérieure à la hauteur correspondante du plot d'obturation 101 à l'état contraint.

En outre, un rayon L2 des plots d'obturation 101 est avantageusement supérieur à un rayon du logement 84 de la tête de vis 83. Le rayon L2 du plot d'obturation 101 est supérieur d'une longueur comprise entre 0.5 et 2mm, notamment 1.5mm par rapport au rayon du logement 84 de la tête de vis 83.

Les dimensions des plots d'obturation 101' à l'état non contraint sont analogues vis-à-vis des dimensions des zones de soudages 68 correspondantes.

Les plots d'obturation 101, 101' pourront être rapportés et fixés sur l'élément anti-rebouclage de flux d'air 93, par exemple par collage, bouterollage, ou encliquetage. Alternativement, l'élément anti-rebouclage de flux d'air 93 est surmoulé sur les plots d'obturation 101, 101'.

Comme cela est illustré par la figure 5b, les plots d'obturation 101 pourront également être reliés entre eux de manière à former un joint 104. Ce joint 104 comporte une pluralité de plots d'obturation 101, 101' et de portions de liaison 105 assurant la liaison entre les plots adjacents 101, 101'. Certaines portions de liaison 105 peuvent suivre le contour des trous traversant 98.

Le joint 104 pourra être issu de matière avec l'élément anti-rebouclage de flux d'air 93 de manière à former une pièce bi-matière. En variante, le joint 104 pourra être rapporté ou surmoulé avec l'élément anti-rebouclage de flux d'air 93.

En variante, un des modules de puissance 50 intégrés dans le dissipateur est remplacé par un module de régulation du porte-balais.

Bien entendu, la description qui précède a été donnée à titre d'exemple uniquement et ne limite pas le domaine de l'invention dont on ne sortirait pas en remplaçant les différents éléments par tous autres équivalents.

## Revendications

1. Machine électrique tournante (10), notamment pour véhicule automobile, comportant:
- un dissipateur thermique (58) muni d'au moins un logement (59),
- un module électrique (50) positionné dans le logement (59) et comportant au moins un terminal de connexion (53),
- un connecteur (55) comportant au moins une piste (54) reliée électriquement au terminal de connexion (53) et un logement (84) destiné à recevoir un moyen de liaison, notamment une tête (83) d'une vis (74), assurant une liaison mécanique et électrique entre la piste (54) du connecteur (55) et le dissipateur thermique (58), et
- un élément anti-rebouclage de flux d'air (93) interposé entre un palier (18) de la machine électrique tournante (10) et le connecteur (55),
**caractérisée en ce que** l'élément anti-rebouclage de flux d'air (93) est disposé pour éviter la recirculation de l'air chaud et comporte au moins un plot d'obturation (101) du logement (84) du moyen de liaison.

2. Machine électrique tournante selon la revendication 1, **caractérisée en ce que** le connecteur (55) comporte au moins une zone de soudage (68) avec le terminal de connexion (53) du module électrique (50), l'élément anti-rebouclage de flux d'air (93) comportant au moins un plot d'obturation (101') de la zone de soudage (68).

3. Machine électrique tournante selon la revendication 1 ou 2, **caractérisée en ce que** le plot d'obturation (101, 101') est réalisé dans un matériau élastique, notamment un matériau polymère.

4. Machine électrique tournante selon l'une quelconque des revendications 1 à 3, **caractérisée en ce qu'**une hauteur (L1) du plot d'obturation (101) à l'état non contraint est supérieure à une hauteur du plot d'obturation (101) à l'état contraint.

5. Machine électrique tournante selon la revendication 4, **caractérisée en ce que** la hauteur du plot d'obturation (101) à l'état non contraint est entre 20 et 40% supérieure, notamment 30% supérieure, à la hauteur du plot d'obturation (101) à l'état contraint.

6. Machine électrique tournante selon l'une quelconque des revendications 1 à 5, **caractérisée en ce qu'**un rayon (L2) du plot d'obturation (101) est supérieur à un rayon du logement (84) du moyen de liaison.

7. Machine électrique tournante selon la revendication 6, **caractérisée en ce que** le rayon (L2) du plot d'obturation (101) est supérieur d'une longueur comprise entre 0.5 et 2mm, notamment 1.5mm, par rapport au rayon du logement (84) du moyen de liaison.

8. Machine électrique tournante selon l'une quelconque des revendications 1 à 7, **caractérisée en ce que** l'élément anti-rebouclage de flux d'air (93) est surmoulé sur le plot d'obturation (101).

9. Machine électrique tournante selon l'une quelconque des revendications 1 à 7, **caractérisée en ce que** le plot d'obturation (101) est rapporté et fixé sur l'élément anti-rebouclage de flux d'air (93).

10. Machine électrique tournante selon l'une quelconque des revendications 1 à 7, **caractérisée en ce que** le plot d'obturation (101) est issu de matière avec l'élément anti-rebouclage de flux d'air (93) de manière à former une pièce bi-matière.

11. Machine électrique tournante selon l'une quelconque des revendications 1 à 10, **caractérisée en ce que** l'élément anti-rebouclage de flux d'air (93) comporte une pluralité de plots d'obturation (101) reliés entre eux de manière à former un joint (104).

12. Machine électrique tournante selon l'une quelconque des revendications 1 à 11, **caractérisée en ce que** le connecteur (55) comporte un muret (67) s'étendant autour du logement (84) destiné à recevoir le moyen de liaison.

13. Machine électrique tournante selon l'une quelconque des revendications 1 à 12, **caractérisée en ce que** le dissipateur thermique (58) est relié à un potentiel positif d'une batterie.

## Patentansprüche

1. Rotierende elektrische Maschine (10), insbesondere für ein Kraftfahrzeug, welche aufweist:
- einen Kühlkörper (58), der mit mindestens einem Sitz (59) versehen ist,
- ein elektrisches Modul (50), das in dem Sitz (59) positioniert ist und mindestens einen Anschluss (53) aufweist,
- einen Verbinder (55), der mindestens eine Leiterbahn (54), die mit dem Anschluss (53) elektrisch verbunden ist, und einen Sitz (84) aufweist, der dazu bestimmt ist, ein Verbindungsmittel, insbesondere einen Kopf (83) einer Schraube (74), aufzunehmen, das eine mechanische und elektrische Verbindung zwischen der Leiterbahn (54) des Verbinders (55) und dem Kühlkörper (58) sicherstellt, und
- ein Element zur Verhinderung eines Luftrückstroms (93), das zwischen einem Lager (18) der rotierenden elektrischen Maschine (10) und dem Verbinder (55) angeordnet ist,
**dadurch gekennzeichnet, dass** das Element zur Verhinderung eines Luftrückstroms (93) dafür eingerichtet ist, die Rezirkulation von Heißluft zu vermeiden, und mindestens einen Verschlussstopfen (101) für den Sitz (84) des Verbindungsmittels aufweist.

2. Rotierende elektrische Maschine nach Anspruch 1, **dadurch gekennzeichnet, dass** der Verbinder (55) mindestens einen Bereich zum Verschweißen (68) mit dem Anschluss (53) des elektrischen Moduls (50) aufweist, wobei das Element zur Verhinderung eines Luftrückstroms (93) mindestens einen Verschlussstopfen (101') für den Schweißbereich (68) aufweist.

3. Rotierende elektrische Maschine nach Anspruch 1 oder 2, **dadurch gekennzeichnet, dass** der Verschlussstopfen (101, 101') aus einem elastischen Material hergestellt ist, insbesondere einem Polymermaterial.

4. Rotierende elektrische Maschine nach einem der Ansprüche 1 bis 3, **dadurch gekennzeichnet, dass** eine Höhe (L1) des Verschlussstopfens (101) im unbelasteten Zustand größer als eine Höhe des Verschlussstopfens (101) im belasteten Zustand ist.

5. Rotierende elektrische Maschine nach Anspruch 4, **dadurch gekennzeichnet, dass** die Höhe des Verschlussstopfens (101) im unbelasteten Zustand um 20 bis 40 % größer, insbesondere um 30 % größer, als die Höhe des Verschlussstopfens (101) im belasteten Zustand ist.

6. Rotierende elektrische Maschine nach einem der Ansprüche 1 bis 5, **dadurch gekennzeichnet, dass** ein Radius (L2) des Verschlussstopfens (101) größer als ein Radius des Sitzes (84) des Verbindungsmittels ist.

7. Rotierende elektrische Maschine nach Anspruch 6, **dadurch gekennzeichnet, dass** der Radius (L2) des Verschlussstopfens (101) um eine Länge zwischen 0,5 und 2 mm, insbesondere von 1,5 mm, größer als der Radius des Sitzes (84) des Verbindungsmittels ist.

8. Rotierende elektrische Maschine nach einem der Ansprüche 1 bis 7, **dadurch gekennzeichnet, dass** das Element zur Verhinderung eines Luftrückstroms (93) auf den Verschlussstopfen (101) aufgeformt ist.

9. Rotierende elektrische Maschine nach einem der Ansprüche 1 bis 7, **dadurch gekennzeichnet, dass** der Verschlussstopfen (101) an das Element zur Verhinderung eines Luftrückstroms (93) angesetzt und an ihm befestigt ist.

10. Rotierende elektrische Maschine nach einem der Ansprüche 1 bis 7, **dadurch gekennzeichnet, dass** der Verschlussstopfen (101) mit dem Element zur Verhinderung eines Luftrückstroms (93) stoffschlüssig verbunden ist, so dass ein Zweikomponententeil gebildet wird.

11. Rotierende elektrische Maschine nach einem der Ansprüche 1 bis 10, **dadurch gekennzeichnet, dass** das Element zur Verhinderung eines Luftrückstroms (93) mehrere Verschlussstopfen (101) aufweist, die miteinander verbunden sind, so dass eine Dichtung (104) gebildet wird.

12. Rotierende elektrische Maschine nach einem der Ansprüche 1 bis 11, **dadurch gekennzeichnet, dass** der Verbinder (55) eine kleine Wand (67) aufweist, die sich um den Sitz (84) herum erstreckt, der dazu bestimmt ist, das Verbindungsmittel aufzunehmen.

13. Rotierende elektrische Maschine nach einem der Ansprüche 1 bis 12, **dadurch gekennzeichnet, dass** der Kühlkörper (58) mit einem positiven Potential einer Batterie verbunden ist.

## Claims

1. Rotating electrical machine (10), notably for a motor vehicle, comprising:
- a heat sink (58) provided with at least one housing (59),
- an electrical module (50) positioned in the housing (59) and comprising at least one connection terminal (53),
- a connector (55) comprising at least one track (54) linked electrically to the connection terminal (53) and a housing (84) intended to receive a link means, notably a head (83) of a screw (74), ensuring a mechanical and electrical link between the track (54) of the connector (55) and the heat sink (58), and
- an airflow loopback prevention element (93) interposed between a bearing (18) of the rotating electrical machine (10) and the connector (55),
**characterized in that** the airflow loopback prevention element (93) is disposed to avoid the recirculation of hot air and comprises at least one sealing plug (101) of the housing (84) of the link means.

2. Rotating electrical machine according to Claim 1, **characterized in that** the connector (55) comprises at least one zone (68) for welding with the connection terminal (53) of the electrical module (50), the airflow loopback prevention element (93) comprising at least one sealing plug (101') for the welding zone (68).

3. Rotating electrical machine according to Claim 1 or 2, **characterized in that** the sealing plug (101, 101') is produced in an elastic material, notably a polymer material.

4. Rotating electrical machine according to any one of Claims 1 to 3, **characterized in that** a height (L1) of the sealing plug (101) in the non-stressed state is greater than a height of the sealing plug (101) in the stressed state.

5. Rotating electrical machine according to Claim 4, **characterized in that** the height of the sealing plug (101) in the non-stressed state is between 20 and 40% greater, notably 30% greater, than the height of the sealing plug (101) in the stressed state.

6. Rotating electrical machine according to any one of Claims 1 to 5, **characterized in that** a radius (L2) of the sealing plug (101) is greater than a radius of the housing (84) of the link means.

7. Rotating electrical machine according to Claim 6, **characterized in that** the radius (L2) of the sealing plug (101) is greater than a length of between 0.5 and 2 mm, notably 1.5 mm, relative to the radius of the housing (84) of the link means.

8. Rotating electrical machine according to any one of Claims 1 to 7, **characterized in that** the airflow loopback prevention element (93) is overmoulded on the sealing plug (101).

9. Rotating electrical machine according to any one of Claims 1 to 7, **characterized in that** the sealing plug (101) is added and fixed onto the airflow loopback prevention element (93).

10. Rotating electrical machine according to any one of Claims 1 to 7, **characterized in that** the sealing plug (101) is made of a single piece with the airflow loopback prevention element (93) so as form a two-material piece.

11. Rotating electrical machine according to any one of Claims 1 to 10, **characterized in that** the airflow loopback prevention element (93) comprises a plurality of sealing plugs (101) linked to one another so as to form a seal (104).

12. Rotating electrical machine according to any one of Claims 1 to 11, **characterized in that** the connector (55) comprises a low wall (67) extending around the housing (84) intended to receive the link means.

13. Rotating electrical machine according to any one of Claims 1 to 12, **characterized in that** the heat sink (58) is linked to a positive potential of a battery.
